(19) Europäisches Patentamt
European Patent Office
Office européen des brevets

(11) **EP 3 940 344 A1**

(12) **EUROPEAN PATENT APPLICATION**

(43) Date of publication:
**19.01.2022 Bulletin 2022/03**

(21) Application number: **20020626.6**

(22) Date of filing: **17.12.2020**

(51) International Patent Classification (IPC):
*G01D 4/00* (2006.01)    *G01D 11/30* (2006.01)
*G01D 13/22* (2006.01)    *G01D 5/25* (2006.01)
*G01D 5/32* (2006.01)    *G01D 5/39* (2006.01)
*G01L 19/08* (2006.01)    *G01L 19/16* (2006.01)
*H01H 19/00* (2006.01)

(52) Cooperative Patent Classification (CPC):
**G01D 5/39; G01D 4/004; G01D 4/008; G01D 13/22; G01L 19/08; G01L 19/16; H01H 19/00;** G01D 5/25; G01D 5/32; G01D 11/30

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.07.2020 EP 20020231**

(71) Applicant: **Linde GmbH
82049 Pullach (DE)**

(72) Inventors:
• **Piers, Lambert
Camberley, Surrey GU16 9NW (GB)**
• **Mahde, Hamid
Aldershot, Hants GU12 4EU (GB)**
• **Jozef, Granat
London, SW161HJ (GB)**

(74) Representative: **Gellner, Bernd et al
Linde GmbH
Intellectual Property EMEA
Dr.-Carl-von-Linde-Straße 6-14
82049 Pullach (DE)**

(54) **A DETECTOR FOR READING A GAUGE**

(57) The present invention provides a detector for reading a gauge with a needle moveable along a scale for indicating a value of a sensed characteristic, the detector comprising: a housing attachable to a gauge; at least one sensor arranged within the housing to face the needle when the housing is, in use, attached to the gauge and arranged to generate a detection signal to indicate when a first portion of the needle is aligned with the sensor; a transmitter in electrical communication with the sensor to receive the detection signal, configured to transmit a signal indicative of the sensed characteristic, wherein the housing further comprises a window arranged to overlay a second portion of the needle, in use, to allow visual inspection of the gauge. This allows the detector to convert an analogue gauge to a connected gauge while keeping visual inspection available.

Fig. 2

## Description

## Background

Integrated valves and associated valve packages are widely known components with millions in operation which still have a serviceable life. For example, such integrated valves may form part of a gas cylinder package for storing and metering compressed gas.

The integrated valves include analogue gas pressure gauges which are used to detect the pressure of gas within a cylinder attached thereto. This gauge value indicates how full the cylinder is and allow for local visual inspection. These gauges are analogue in that the needle merely displays the pressure value or fill level with no digital recording or transmission of the data.

There is now a push towards having digitally enabled infrastructure and ecosystems for these integrated valves. In particular, the ability to take meter readings remotely and record these in a database is of great importance. The legacy fleet of integrated valves with analogue gauges are unable to transmit their sensed properties.

Accordingly, in order to upgrade the systems to integrate with the digital infrastructure it is necessary to replace the entire integrated valve which is relatively expensive and generates large amounts of waste.

There is therefore a need to connect existing valves to a digital system.

## Summary

The present invention provides a detector according to claim 1. This allows the detector to convert an analogue gauge to a connected gauge while keeping visual inspection available.

The detector may further comprise a locating segment for aligning the detector to the gauge, the locating segment comprising a cavity arranged to receive a locating component on the gauge to rotationally align with the gauge. This prevents readings from being incorrect due to an offset between the detector and the gauge.

The present invention further provides a detector according to claim 3. The locating segment prevents readings from being incorrect due to an offset between the detector and the gauge.

The housing may further comprise a window arranged to overlap a second portion of the needle, in use, to allow visual inspection of the gauge. This allows the detector to convert an analogue gauge to a connected gauge while keeping visual inspection available.

The cavity may be arranged to receive a hex-nut of the gauge to align the detector to the gauge. Such hex-nuts are typically provided with many standard gauges and are aligned with the scale in a fixed relationship. This allows for easy co-location of the gauge and detector.

The detector may be flexible between the locating segment and the optical, preferably via a living hinge. This allows the detector to be flexed after the locating segment has been attached to quickly and accurately fit the detector to a gauge.

The detector may comprise a flange for snap-fitting to a face of the gauge. This is a quick and effective way to attach the detector to the gauge.

The flange may have a thickness of less than 6mm, preferably less than 4mm. This allows the detector to attach to a gauge without removing a surrounding integrated valve housing.

The sensor may be an optical sensor. Optical sensing is a reliable way to detect needle position.

The detector may further comprise at least one light source arranged to illuminate the gauge. This allows the detected to be used in an un-lit area and/or may improves the accuracy of the reading method.

The sensor may be a magnetic sensor, and the needle or an attachment thereto is magnetic. This provides an alternative reliable way to detect needle position.

## Brief Description of the Figures

The present invention will now be described, by way of example only, with reference to the accompanying figures in which:

Figure 1 shows a front view of a prior art pressure gauge;
Figure 2 shows a front view of the pressure gauge of Figure 1 installed within a typical integrated valve;
Figures 3A and 3B show a schematic view of apparatus for use with the detector of the present invention;
Figures 4A and 4B show a further embodiment of apparatus for use with a detector according to the present invention;
Figure 5 shows a schematic cross-section of a detector according to the present invention;
Figure 6 shows a front view of a printed circuit board for use in a detector according to the present invention;
Figure 7 shows a partial front view of a housing for a detector according to the present invention;
Figure 8 shows further features of the housing of Figure 7;
Figure 9 shows a back view of the housing of Figure 7;

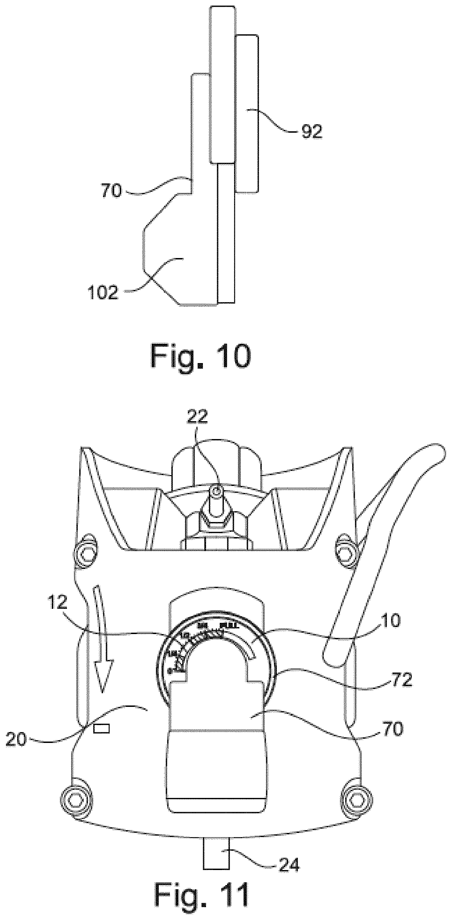

Figure 10 shows a side view of the housing of Figure 7;
Figure 11 shows the housing of Figure 7 installed on the integrated valve of Figure 2;
Figure 12 shows a perspective view of a detector according to the present invention being installed; and
Figure 13 shows a further perspective view of a detector according to the present invention being installed.

## Detailed Description of the Figures

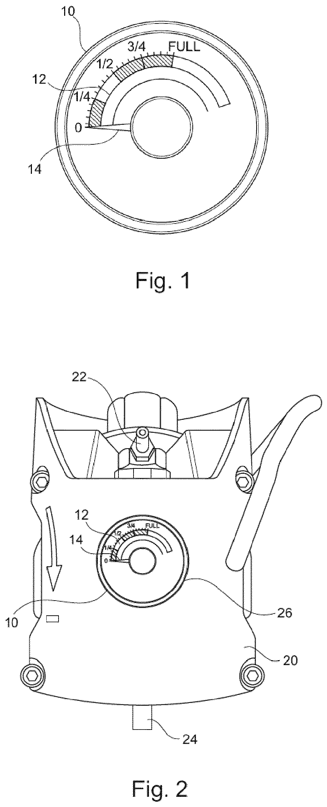

Figure 1 shows a gauge 10 which is generally well known in the art and deployed widely for use with compressed gas cylinders and pressure regulators. The gauge 10 displays information about a sensed characteristic of the cylinder. For example, the sensed characteristic may be the internal pressure of the cylinder and indicates along scale 12 how full the cylinder is. This is indicated by virtue of needle 14 which moves along the scale 12. The scale 12 may directly show the value of the sensed characteristic, for example the scale 12 may indicated particular pressure values. Alternatively, the scale 12 may be as depicted in Figure 1 and show a fill level of the cylinder as a fraction. This fill level is derived from the directly sensed characteristic. The needle 14 aligns with a value or fraction to indicate that this is the pressure and/or fill level of the cylinder.

In the exemplary pressure gauge 10 shown in the present figures the scale extends over approximately 90°. However, this is merely an example and the scale 12 may extend over any fraction of the available area. For example, the scale 12 may extend over approximately 180° or greater. In further examples the scale 12 may be a linear scale or any other non-semi-circular scale.

In use, the pressure gauge 10 is attached to a cylinder via an integrated valve assembly 20 such as shown in Figure 2. In alternative embodiments, the pressure gauge 10 may be provided on a separate pressure regulator, arranged to regulate the pressure of a flow of gas from a cylinder. This integrated valve assembly 20 and generally comprises an outer housing within an annular opening 26 for receiving the pressure gauge 10. As can be seen in Figure 2 the assembly further comprises a downpipe 24 for receiving gas from the compressed gas cylinder and an outlet port 22 for expelling the gas to a user. There is typically a tight fit between the pressure gauge 10 and the opening 26 in the integrated valve housing 20. Typically, this may be on the order of approximately 5mm to 6mm.

These pressure gauges 10 are extensively used in many fields including, for example, medical, and oil and gas operations. The pressure gauges 10 have been used to inform a user about the fill level of the cylinder for many years. However, in more modern systems there is a need for the information about the fill level of the cylinder to be transmitted to an external server. This allows remote monitoring of the fill level of the cylinder and identification of any issues. Such monitoring is particularly relevant in environments where the cylinder may be relatively inaccessible or remotely located. This monitoring is also important where there are multiple cylinders present at a given location. The time to check the content levels of all of the cylinders is time consuming and prone to errors in recording In order to replace the pressure gauge 10 with a connected gauge or sensor (also known as a "*smart*" pressure gauge) the gauge unit typically will need to be replaced. In some embodiments the integrated valve unit 20 itself will also need to be replaced. This is relatively expensive and poses safety risks and will generally necessitate removal of the valve units 20 from the user base while the refurbishment occurs.

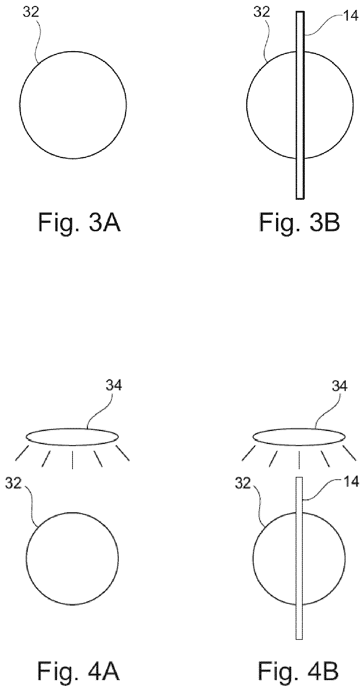

Figures 3A and 3B show how an optical sensor 32, in particular a light sensor, can be used to detect the position of the needle 14 of a pressure gauge 10. Any other suitable optical sensor 32 could be used in the detector. The optical sensor 32 may operate in the visible light range. However, in an alternative embodiment the optical sensor 32 may detect light in a non-visible light range such as the infrared range.

In Figure 3A the optical sensor 32 is unobstructed and hence will not record a detection signal. In Figure 3B as the needle 14 passes the optical sensor 32 it occludes a portion of the sensor 32 to thereby register a detection signal. This detection signal indicates that the needle 14 is aligned with the sensor 32. The detector further comprises a transmitter (not shown) arranged to transmit a signal to a further location. The transmitted signal is indicative of the characteristic being sensed. In particular, when the gauge is a pressure gauge 10 the characteristic being sensed may be pressure and the signal transmitted from the transmitter may be an indication of the pressure or the fill of the gas cylinder. The transmitter may use any known wired or wireless transmission protocol to transmit the signal. For example, the transmitter may use the internet, Wi-Fi and/or Bluetooth to transmit the signal. The transmitter may transmit the signal directly to a remote server for monitoring and logging of the signal. Alternatively, there may be a local repeater unit which transmits the signal to the remote server. The local repeater unit may communicate with the transmitter via a low-power, low-range method before forwarding on the signal to the remote server via a longer range transmission method. Multiple detectors may be in communication with a single repeater unit.

The embodiment shown in Figures 3A and 3B does not include any additional light sources and instead rely upon ambient lighting in the area where the cylinder pressure gauge 10 is located. For example, this may be suitable for installations where the gas cylinders are located within a room which has permanent lighting such as a storage facility.

In other embodiments, a non-optical sensor could be used to detect the position of the needle 14. Any suitable sensor may be used, but for example the sensor may be a magnetic sensor such as a Hall effect sensor and at least a portion of the needle 14, or an attachment thereto, may be magnetic for detection by the Hall effect sensor.

The position and location of the optical sensor 32 will be discussed in more detail later. However, in brief it is noted that the optical sensor 32 may be provided as a single optical sensor 32 or as part of a larger array of optical sensors 32. If the single optical sensor 32 is provided this may be aligned with a position where the needle 14 is indicating approximately halfway filled on the scale 12. Alternatively, the sensor 32 may be aligned with a position where the needle 14 is indicating that the cylinder is near to empty on the scale 12. The selection of the location for the optical sensor 32 is a matter of design choice based upon the required operations.

Figures 4A and 4B depict an embodiment of the invention in which the detector further comprises a light source 34. The light source 34 is arranged to illuminate the pressure gauge 10 and hence the needle 14 to ensure that as the needle 14 occludes the optical sensor 32 the change in light intensity is sufficiently large to be detected by the optical sensor 32. The light source 34 may provide light in the visible range. Alternatively, or additionally, the light source 34 may provide light in a non-visible range such as an infrared wavelength.

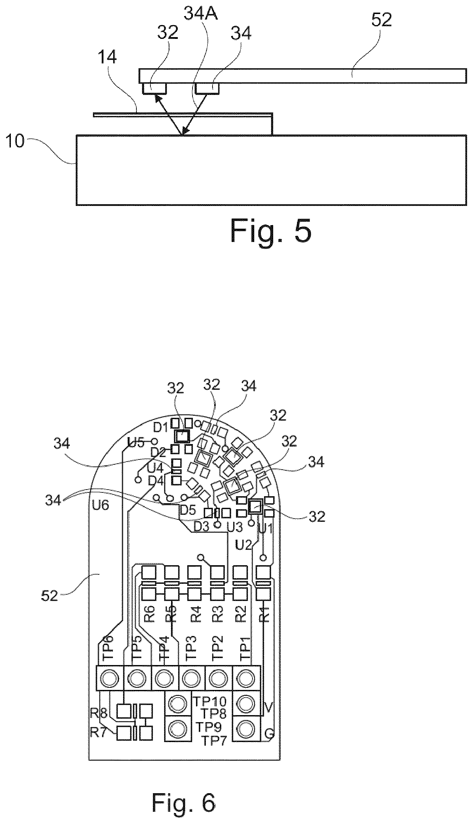

While the light source 34 may be positioned underneath a face of the pressure gauge 10 such that the needle 14 passes between the light source 34 and the optical sensor 32, this is relatively more complex to install as it would require the pressure gauge 10 to be physically disassembled. Instead, in preferred embodiments such as depicted in Figures 5 and 6 the light source 34 may be provided generally adjacent to the light sensor 32. In particular, the light source 34 and the optical sensor 32 may be provided on a single printed circuit board 52 as depicted in these figures. The light source 34 may be configured to provide a generally even light profile across the face of the gauge 10.

Figure 5 shows a schematic of the operation of the detector in this embodiment. In particular, the light source 34 emits a beam of light 34A which is transmitted towards the pressure gauge 10 and away from the printed circuit board 52 and hence away from the light sensor 32. This light 34A is interrupted by the needle 14 and the light sensor 32 detects this interruption which is used to determine the position of the needle 14.

As depicted in Figure 6, the detector may comprise a plurality of light sources 34 and a corresponding plurality of light sensors 32. At least one of the lights sources 34 may be provided between two adjacent light sensors 32. The light sources 34 may be distributed across the printed circuit board 52 so as to ensure an even supply of light to the pressure gauge 10. The plurality of optical sensors 32 may be generally arranged so as to span the entire breadth of the scale 12. That is, the optical sensors 34 may be arranged so as to provide a number of discrete readings. These discrete readings may correspond to milestone points along the entire scope of the scale 12 (such as multiples of 25%). Alternatively, the discrete readings may be offset from these milestones. The optical sensors 32 may be offset from the milestone values, with the needle position inferred as appropriate.

In particular, the locations of the sensors 32 may be defined in that the detector comprises N sensors denoted $S_N$. N being a natural number greater than or equal to 2. Each sensor may then be arranged such that the position of sensor $S_N$ corresponds to $\frac{100}{N+1}\frac{100}{N+1}\%$ of the breadth of the scale 12. For example, if three sensors are provided the sensors may be arranged at 25%, 50% and 75% of the total scale. In this sense, the sensors can be used to detect the indicated value across its entire breadth.

The detector may further comprise two additional optical sensors 32. These additional optical sensors 32 may generally correspond to a full (i.e. at or near to 100%) condition and empty (i.e. at or near to 0%) condition. These additional sensors then ensure that for any given position the detection can be achieved.

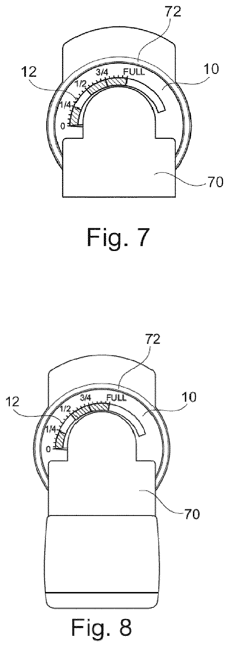

While the present invention allows for the reading of the pressure gauge 10 to be transmitted to a remote location via the transmitter it is still a preferred option that the pressure gauge 10 can be read locally. In order to facilitate this, the detector comprises a housing 70 which covers at least a portion of the pressure gauge 10 and needle 14 pathway. However, the housing 70 may further comprise a window 72 which generally aligns with the scale 12 to allow the scale 12 to be read even when the detector is in situ. This arrangement is shown in Figures 7 and 8. The window 72 may merely be formed of a cutout portion of the housing 70. Alternatively, the window 72 may further comprise a translucent or transparent component such as glass or a transparent plastic to allow a user to visually inspect the pressure gauge 10.

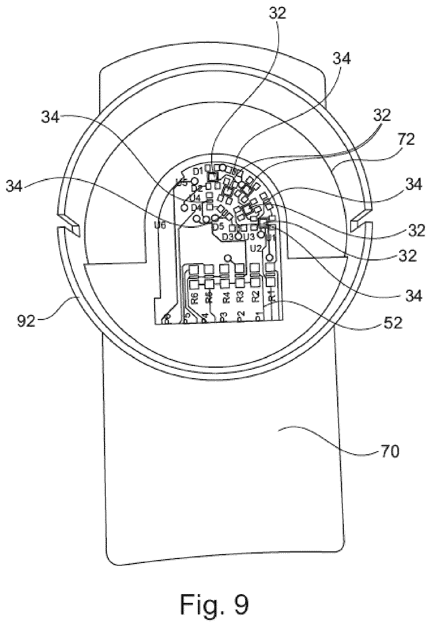

The reverse of the detector housing 70 is shown in Figure 9. This figure shows the printed circuit board 52 mounted within a slot in the housing 70. The window 72 for viewing of the scale 12 is clearly visible in this view. The arrangement of the light sources 34 and optical sensors 32 can be shown in this figure as to how they would overlie the pressure gauge 10 in use.

As previously discussed, the gap between the integrated valve housing 20 and the pressure gauge 10 is relatively small (in the order of 5mm to 6mm). The removal of the integrated valve housing 20 is relatively complex and hence it would be preferable if the detector is installable without the removal of the integrated valve housing 20. In order to facilitate this, the detector housing 70 may comprise attaching means to affix to a front face of the pressure gauge 10. In particular, in the embodiment depicted in Figure 9 the housing 70 comprises an annular protrusion 92 generally in the form of a cylinder which acts to snap-fit around a front face of the pressure gauge 10. This protrusion 92 may have a degree of flexibility to facilitate this fitting. Further, the protrusion 92 may have a width such that it can fit in the gap between the housing 20 and the pressure gauge 10, for example of less than 5mm.

Given the nature in which the detector senses the position of the needle 14 within the pressure gauge 10 it is important to correctly locate the detector relative to the pressure gauge 10. That is, the light sensor 32 must align with the scale 12 at the correct point. This may be particularly relevant for embodiments where the detector uses the push fit attachment to the front of the pressure gauge 10. However, it is equally applicable to any attachment mechanism for the detector. If the detector were installed rotationally offset from the pressure gauge 10 the readings would evidently be wrong by the same offset and hence the information provided would be incorrect. In order to address this, the detector may further comprise a locating segment 124 for aligning the detector the pressure gauge 10. The locating segment 124 may comprise a cavity which is arranged to receive a portion of the pressure gauge in order to locate the detector to the pressure gauge 10.

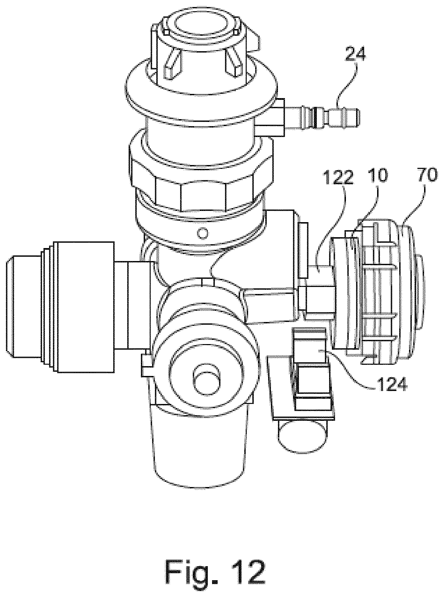

Many pressure gauges 10 comprise a hexagonal nut 122 behind the face of the gauge. In situations where the pressure gauge 10 is aligned with the locking nut 122, the shape of the locking nut 122 may be used to locate the detector. That is, in situations where there is a known angular orientation between the pressure gauge 10 and the locking nut 122. In particular, the locating segment 124 may comprise a correspondingly shaped cavity (for example, a portion of a hexagon as shown in Figure 12) for receiving the locking nut 122. This ensures that the detector can only be offset by multiples of the number of sides of the locking nut 122. Accordingly, any offset would be immediately visible to an installer or user as the gauge would be offset by a relatively large amount.

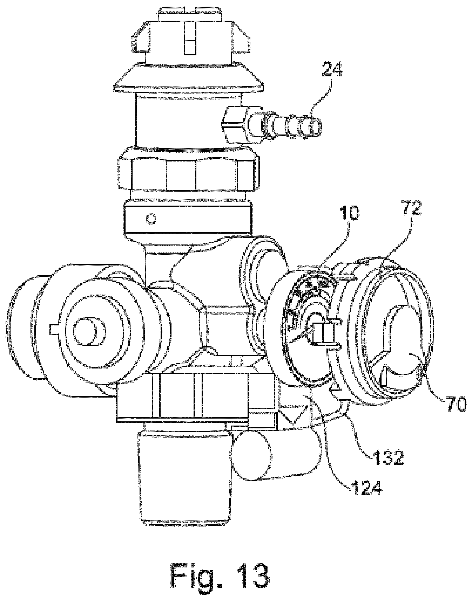

In particular embodiments such as those schematically shown in Figure 13 the front portion of the housing 70 of the detector may be connected to the locating segment 124 via a flexible portion 132. In particular, the flexible portion 132 may comprise a segment of material which is readily able to bend along its length. This bending may be localised at a point via a living hinge or may be freely able to bend along any of its length. In use, this allows the locating portion 124 to connect to the locking nut 122 and then the front portion of the detector to be folded around the flexible portion 132 to connect with the gauge 10 in the correct position. Accordingly, this provides an easy method of installation of the detector 10.

Thus, the detector described above may be readily attached to an existing cylinder package in order to convert an analogue sensor into a smart sensor which is able to communicate the detected information externally. As discussed above, the present invention is described particularly in relation to pressure gauges 10. However, the technology is evidently applicable to any type of gauge which operates using a needle dial.

**Claims**

1. A detector for reading a gauge with a needle moveable along a scale for indicating a value of a sensed characteristic, the detector comprising:

   a housing attachable to a gauge;
   at least one sensor arranged within the housing to face the needle when the housing is, in use, attached to the gauge and arranged to generate a detection signal to indicate when a first portion of the needle is aligned with the sensor;
   a transmitter in electrical communication with the sensor to receive the detection signal, configured to transmit a signal indicative of the sensed characteristic,
   wherein the housing further comprises a window arranged to overlay a second portion of the needle, in use, to allow visual inspection of the gauge.

2. The detector of claim 1, further comprising a locating segment for aligning the detector to the gauge, the locating segment comprising a cavity arranged to receive a locating component on the gauge to rotationally align with the gauge.

3. A detector for reading a gauge with a needle moveable along a scale for indicating a value of a sensed characteristic, the detector comprising:

   a housing attachable to a gauge;
   at least one sensor arranged within the housing and arranged to generate a detection signal to indicate when a first portion of the needle is aligned with the sensor;
   a transmitter in electrical communication with the sensor to receive the detection signal, configured to transmit a signal indicative of the sensed characteristic; and
   a locating segment for aligning the detector to the gauge, the locating segment comprising a cavity arranged to receive a locating component on the gauge to rotationally align with the gauge.

4. The detector of claim 3, wherein the housing further comprises a window arranged to overlap a second portion of the needle, in use, to allow visual inspection of the gauge.

5. The detector of any of claims 2 to 4, wherein the cavity is arranged to receive a hex-nut of the gauge to align the detector to the gauge.

6. The detector of any of claims 2 to 5, wherein the detector is flexible between the locating segment and the optical, preferably via a living hinge.

7. The detector of any preceding claim, wherein the detector comprises a flange for snap-fitting to a face of the gauge.

8. The detector of claim 7, wherein the flange has a thickness of less than 6mm, preferably less than 4mm.

9. The detector of any preceding claim, wherein the sensor is an optical sensor.

10. The detector of claim 9, further comprising at least one light source arranged to illuminate the gauge.

11. The detector of any of claims 1 to 8, wherein the sensor is a magnetic sensor, and the needle or an attachment thereto is magnetic.

Fig. 1

Fig. 2

Fig. 3A

Fig. 3B

Fig. 4A

Fig. 4B

Fig. 5

Fig. 6

72

12    10

3/4    FULL
1/2
1/4
0

70

Fig. 7

72

12    10

3/4    FULL
1/2
1/4
0

70

Fig. 8

Fig. 9

Fig. 10

Fig. 11

Fig. 12

Fig. 13

Europäisches
Patentamt

European
Patent Office

Office européen
des brevets

# EUROPEAN SEARCH REPORT

Application Number

EP 20 02 0626

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/064563 A1 (KIM YEONMI [KR]; LEE BYUNGCHEOL [KR]) 14 July 2005 (2005-07-14) * Abstract, Desc. p. 2 / l. 10-13, p. 12 / l. 12 - p. 20 / l. 28, p. 27 /l. 20-26, Figs. 1-7, 11-12 * | 1-11 | INV. G01D4/00 G01D11/30 G01D13/22 G01D5/25 G01D5/32 G01D5/39 G01L19/08 G01L19/16 H01H19/00 |
| X | US 5 231 508 A (MURPHY JR FRANK W [US]) 27 July 1993 (1993-07-27) * Abstract, Desc. col. 4 / l. 44 - col. 5 / l. 61, Figs. 1-8 * | 1,3,11 | |
| X | US 2008/048879 A1 (LIPMAN AHARON [IL]) 28 February 2008 (2008-02-28) * Abstract, Desc. [0016],[0017], [0094]-[0133], Figs. 1-3 * | 1,11 | |
| A | WO 86/06529 A1 (SHELLEY EDWIN F) 6 November 1986 (1986-11-06) * Abstract, Desc. p. 3 / l. 29 - p.4 / l. 24, p. 7 / l. 8 - p. 12 / l. 28, Figs. 1-5 * | 1-11 | |

TECHNICAL FIELDS SEARCHED (IPC)

G01D

The present search report has been drawn up for all claims

| Place of search | Date of completion of the search | Examiner |
|---|---|---|
| Munich | 11 May 2021 | Reim, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 3 940 344 A1

## ANNEX TO THE EUROPEAN SEARCH REPORT
## ON EUROPEAN PATENT APPLICATION NO.

EP 20 02 0626

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2021

| Patent document cited in search report | | Publication date | Patent family member(s) | | Publication date |
|---|---|---|---|---|---|
| WO 2005064563 | A1 | 14-07-2005 | KR 20060035566 A<br>WO 2005064563 A1 | | 26-04-2006<br>14-07-2005 |
| US 5231508 | A | 27-07-1993 | NONE | | |
| US 2008048879 | A1 | 28-02-2008 | CA 2590797 A1<br>CN 101116118 A<br>EP 1856679 A2<br>JP 2008523467 A<br>US 2008048879 A1<br>WO 2006061830 A2 | | 15-06-2006<br>30-01-2008<br>21-11-2007<br>03-07-2008<br>28-02-2008<br>15-06-2006 |
| WO 8606529 | A1 | 06-11-1986 | EP 0221110 A1<br>WO 8606529 A1 | | 13-05-1987<br>06-11-1986 |

EPO FORM P0459

For more details about this annex : see Official Journal of the European Patent Office, No. 12/82